# EUROPÄISCHE PATENTANMELDUNG

(11) **EP 4 306 381 A1**
(43) Veröffentlichungstag der Anmeldung: **17.01.2024**
(21) Anmeldenummer: 23184299.8
(22) Anmeldetag: 07.07.2023
(51) Int. Cl.: B60W 50/16, B62D 5/00, B62D 5/04, B62D 6/00, B60W 50/14

(54) **BY-WIRE"-BEDIENSYSTEM EINES KRAFTFAHRZEUGS UND VERFAHREN ZUM BETREIBEN EINES SOLCHEN BEDIENSYSTEMS**

(30) Priorität: 13.07.2022 BE 202205572
(71) Anmelder: thyssenkrupp Presta Aktiengesellschaft, 9492 Eschen (LI); thyssenkrupp AG, 45143 Essen (DE)
(72) Erfinder: Malsam, Robin, 6800 Feldkirch (AT); Csaba, Andras, 1021 Budapest (HU); Lapis, Leonard, 9466 Sennwald (CH); Polmans, Kristof, 6464 Tarrenz (AT)
(74) Vertreter: thyssenkrupp Intellectual Property GmbH

(57) **Zusammenfassung**

Die vorliegende Erfindung betrifft ein Verfahren zum Betreiben eines Bediensystems (1.1, 1.2, 1.3) eines Kraftfahrzeugs, bei dem ein Steuerbefehl (M1) zum Steuern des Kraftfahrzeugs über ein Steuerelement (5.1, 3.2, 3.3) vorgegeben wird, der über das Steuerelement (3.1, 3.2, 3.3) vorgegebene Steuerbefehl (M1) sensorisch erfasst und von einer elektronischen Steuereinheit (4) an eine elektromechanische Aktuatoreinheit (5.1, 5.2, 5.5) als Steuerungssignal weitergegeben wird, wobei die Aktuatoreinheit (5.1, 5.2, 5.5) den Steuerbefehl (M1) entsprechend dem Steuerungssignal umsetzt. Das Bediensystem (1.1, 1.2, 1.3) wird dabei auf ein Auftreten einer Abweichung von einem Sollverhalten der Aktuatoreinheit (5.1, 5.2, 5.5) überwacht, wobei bei einer erkannten Abweichung eine taktile Rückmeldung auf das Steuerelement (3.1, 3.2, 3.3) aufgebracht wird.

Ferner betrifft die Erfindung ein Bediensystem (1.1, 1.2, 1.3) eines Kraftfahrzeugs, das ausgebildet ist, nach einem vorstehend genannten Verfahren betrieben zu werden.

## Beschreibung

Die Erfindung betrifft ein Verfahren zum Betreiben eines Bediensystems eines Kraftfahrzeugs, insbesondere eines Brake-by-Wire-Systems, eines Electronic-Power-Control-Systems oder eines Steer-by-Wire-Lenksystems, bei dem ein Steuerbefehl zum Steuern des Kraftfahrzeugs über ein Steuerelement vorgegeben wird, der über das Steuerelement vorgegebene Steuerbefehl sensorisch erfasst und von einer elektronischen Steuereinheit an eine elektromechanische Aktuatoreinheit als Steuerungssignal weitergegeben wird, wobei die Aktuatoreinheit den Steuerbefehl entsprechend dem Steuerungssignal umsetzt.

Des Weiteren betrifft die Erfindung ein Bediensystem eines Kraftfahrzeugs, das ein Steuerelement, eine Sensoreinheit, eine Steuereinheit, eine elektromechanische Aktuatoreinheit und einen Feedback-Aktuator umfasst, wobei das Steuerelement ausgebildet ist, bei Betätigung einen Steuerbefehl zum Steuern eines Kraftfahrzeugs als Steuerungsinformation vorzugeben, die Sensoreinheit ausgebildet ist, die von dem Steuerelement vorgegebene Steuerungsinformation zu erfassen, die Steuereinheit ausgebildet ist, basierend auf der erfassten Steuerungsinformation zur Umsetzung des Steuerbefehls ein Steuerungssignal zur Ansteuerung einer elektromechanischen Aktuatoreinheit bereitzustellen, die elektromechanische Aktuatoreinheit ausgebildet ist, den Steuerbefehl entsprechend dem bereitgestellten Steuerungssignal umzusetzen, und der Feedback-Aktuator ausgebildet ist, eine taktile Rückmeldung auf das Steuerungssignal aufzubringen.

Im Stand der Technik ist ein Steer-by-Wire-Lenksystem als Bediensystem eines Kraftfahrzeugs beispielsweise aus der DE 10 2020 205 904 A1 bekannt. Ebenfalls im Stand der Technik bekannt sind Brake-by-Wire-Systeme sowie Electronic-Power-Control-Systeme, die auch unter dem Ausdruck "elektronisches Gaspedal" bekannt sind. Nachteilig bei solchen "Drive-by-Wire"-Bediensystemen ist, dass ein Güteverlust der Aktuatoreinheit, beispielsweise aufgrund von Alterung und Verschleiß, zwar das Steuern des Kraftfahrzeugs negativ beeinflussen kann, aber aufgrund der mechanischen Entkoppelung von Steuerelement und Aktuatoreinheit von einem Fahrzeugnutzer regelmäßig nicht wahrgenommen wird.

Vor diesem Hintergrund ist es eine Aufgabe der vorliegenden Erfindung ein eingangs genanntes Verfahren zum Betreiben eines Kraftfahrzeugs sowie ein eingangs genanntes Bediensystem eines Kraftfahrzeugs zu verbessern, insbesondere dahingehend, dass ein Fahrzeugnutzer eine Veränderung im Betriebsverhalten der Aktuatoreinheit verbessert wahrnimmt.

Zur Lösung dieser Aufgabe werden ein Verfahren zum Betreiben eines Bediensystems eines Kraftfahrzeugs und ein Bediensystem eines Kraftfahrzeugs gemäß den unabhängigen Ansprüchen vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein Verfahren zum Betreiben eines Bediensystems eines Kraftfahrzeugs vor, bei dem ein Steuerbefehl zum Steuern des Kraftfahrzeugs über ein Steuerelement vorgegeben wird. Der über das Steuerelement vorgegebene Steuerbefehl wird sensorisch erfasst, insbesondere ausschließlich sensorisch erfasst, und von einer elektronischen Steuereinheit, insbesondere einer ECU (ECU: Electronic Control Unit), an eine elektromechanische Aktuatoreinheit als Steuerungssignal weitergegeben, wobei die Aktuatoreinheit den Steuerbefehl entsprechend dem Steuerungssignal umsetzt. Dabei wird das Bediensystem auf ein Auftreten einer Abweichung von einem Sollverhalten der Aktuatoreinheit überwacht, und bei einer erkannten Abweichung eine taktile Rückmeldung auf das Steuerelement aufgebracht. Insbesondere ist vorgesehen, dass ein entsprechend angesteuerter Feedback-Aktuator die taktile Rückmeldung auf das Steuerelement aufbringt. Vorteilhafterweise kann ein Fahrzeugnutzer eine Veränderung im Betriebsverhalten der Aktuatoreinheit, die von einem Sollverhalten abweicht, durch die auf das Steuerelement aufgebrachte taktile Rückmeldung wahrnehmen.

Vorteilhafterweise wird das Ansprechverhalten des Steuerelements bei einem erkannten Abweichen der Aktuatoreinheit von einem Sollverhalten gegenüber einem Normalbetrieb, bei dem die Aktuatoreinheit einem Sollverhalten folgt, verändert, insbesondere indem Steuerungssignale für einen Feedback-Aktuator, der die taktile Rückmeldung auslöst, gegenüber einem Normalbetrieb um wenigstens 10 % verändert werden, weiter insbesondere in einem Bereich zwischen 10 % und 100 % verändert werden, sodass vorzugsweise ein entsprechend verändertes Ansprechverhalten des Steuerelements bei der Bedienung des Steuerelements hervorgerufen wird. Vorteilhafterweise ist durch diese Maßnahmen einzeln oder in Kombination die Wahrnehmbarkeit eines Auftretens eine Abweichung von einem Sollverhalten der Aktuatoreinheit durch den Fahrzeugnutzer weiter verbessert.

Gemäß einer vorteilhaften Ausgestaltung wird das Bediensystem von einer Diagnoseeinheit auf ein Auftreten einer Abweichung von einem Sollverhalten der Aktuatoreinheit überwacht. Die Diagnoseeinheit kann dabei insbesondere von der Steuereinheit umfasst sein.

Eine vorteilhafte Weiterbildung des Verfahrens sieht vor, dass ein Güteabfall der Aktuatoreinheit als Abweichung von dem Sollverhalten überwacht wird. Ein solcher Güteabfall kann insbesondere auf einen Verschleiß und/oder eine Materialalterung der Aktuatoreinheit zurückzuführen sein. Insbesondere kann ein Güteabfall zur Folge haben, dass die Aktuatoreinheit schwergängiger arbeitet und/oder sich ein Spiel der Aktuatoreinheit erhöht und/oder Aussetzer im Betrieb der Aktuatoreinheit auftreten. Durch die taktile Rückmeldung auf das Steuerelement kann ein Fahrzeugnutzer vorteilhafterweise den Güteabfall wahrnehmen. Ohne die taktile Rückmeldung wäre ansonsten das Fahrverhalten des Kraftfahrzeugs aufgrund der Abweichung des Verhaltens der Aktuatoreinheit von dem Sollverhalten verändert, wobei das Verhalten des Steuerelements unverändert bliebe.

Weiter vorteilhaft wird bei einer erkannten Abweichung von dem Sollverhalten ein Rückmeldungssignal generiert, wobei basierend auf dem Rückmeldungssignal die taktile Rückmeldung erzeugt wird. Vorteilhafterweise ist die Art der taktilen Rückmeldung an die Art der Abweichung von dem Sollverhalten angepasst, insbesondere derart, dass eine gleiche Abweichung von einem Sollverhalten der Aktuatoreinheit zu einer gleichen taktilen Rückmeldung führt. Vorteilhafterweise kann ein Fahrzeugnutzer ein von einem Sollverhalten abweichendes Verhalten durch diese Ausgestaltung besser einordnen. Insbesondere ist vorgesehen, dass vorgegebenen Abweichungen von einem Sollverhalten der Aktuatoreinheit vorgegebene Bewegungsmuster, die vorteilhafterweise als taktile Rückmeldung auf das Steuerelement aufgebracht werden, zugeordnet sind. Arbeitet die Aktuatoreinheit beispielsweise schwergängiger als ein Sollbetriebsverhalten vorsieht, ist insbesondere vorgesehen, dass ein im Vergleich zu einem Normalbetrieb erhöhtes Widerstandsmoment auf das Steuerelement aufgebracht wird. Oder hat sich beispielsweise ein Spiel der Aktuatoreinheit gegenüber einem vorgegebenem Sollverhalten erhöht, so ist insbesondere vorgesehen, dass ein auf das Steuerelement aufgebrachtes Widerstandsmoment im Vergleich zu einem Normalbetrieb verringert wird und/oder ein Widerstandsmoment im Vergleich zu einem Normalbetrieb verzögert auf das Steuerelement aufgebracht wird.

Eine weitere vorteilhafte Ausgestaltung des Verfahren sieht vor, dass ein Grad einer Abweichung von dem Sollverhalten erfasst wird. Vorteilhafterweise wird das Rückmeldungssignal abhängig von dem erfassten Grad der Sollwertabweichung generiert. Vorteilhafterweise nimmt dabei die Intensität des Rückmeldungssignals in Abhängigkeit von der erfassten Abweichung von dem Sollverhalten zu, insbesondere proportional zu, wobei dadurch die auf das Steuerelement aufgebrachte taktile Rückmeldung vorteilhafterweise ebenfalls entsprechend einer Zunahme einer Abweichung zunimmt. Arbeitet die Aktuatoreinheit beispielsweise 10 % schwergängiger als ein Sollbetriebsverhalten vorsieht, ist insbesondere vorgesehen, dass ein im Vergleich zu einem Normalbetrieb um 10 % erhöhtes Widerstandsmoment auf das Steuerelement aufgebracht wird. Arbeitet die Aktuatoreinheit hingegen beispielsweise 20 % schwergängiger, als ein Sollbetriebsverhalten vorsieht, ist insbesondere vorgesehen, dass ein im Vergleich zu einem Normalbetrieb um 20 % erhöhtes Widerstandsmoment auf das Steuerelement aufgebracht wird.

Insbesondere ist vorgesehen, dass die taktile Rückmeldung umso ausgeprägter erzeugt wird, je höher der erfasste Grad der Abweichung von dem Sollverhalten ist. Die Ausprägung der taktilen Rückmeldung kann insbesondere auch überproportional zu dem erfassten Grad der Abweichung von dem Sollverhalten erzeugt werden, insbesondere um die Wahrnehmbarkeit der Abweichung des Verhaltens der Aktuatoreinheit von dem Sollverhalten noch weiter zu verbessern. Insbesondere kann vorgesehen sein, dass dann, wenn die die Aktuatoreinheit beispielsweise 10 % schwergängiger arbeitet, als ein Sollbetriebsverhalten vorsieht, ein im Vergleich zu einem Normalbetrieb um 25 % erhöhtes Widerstandsmoment auf das Steuerelement aufgebracht wird.

Eine vorteilhafte Ausgestaltungsvariante des Verfahrens sieht vor, dass das Bediensystem ein Brake-by-Wire-System mit einem Bremspedal als Steuerelement und einer Bremsaktuatoreinheit als elektromechanischer Aktuatoreinheit ist. Wird eine Abweichung des Sollverhaltens der Bremsaktuatoreinheit erfasst, wird also bei dieser Ausgestaltung eine taktile Rückmeldung auf das Bremspedal aufgebracht.

Eine weitere vorteilhafte Ausgestaltungsvariante sieht vor, dass das Bediensystem ein Electronic-Power-Control-System mit einem Gaspedal als Steuerelement und einer Antriebsaktuatoreinheit als elektromechanischer Aktuatoreinheit ist. Der Ausdruck "Gaspedal" wird dabei in seiner allgemeinen Bedeutung gebraucht und gilt insofern insbesondere für sämtliche Fahrzeugantriebe, insbesondere sowohl für Fahrzeuge mit Verbrennungsmotoren als auch für Fahrzeuge mit Elektromotoren. Wird eine Abweichung des Sollverhaltens der Antriebsaktuatoreinheit erfasst, wird also bei dieser Ausgestaltung eine taktile Rückmeldung auf das Gaspedal aufgebracht.

Eine weitere vorteilhafte Ausgestaltungsvariante des Verfahrens sieht vor, dass das Bediensystem ein Steer-by-Wire-Lenksystem mit einer Lenkhandhabe, insbesondere einem Lenkrad, als Steuerelement und einem Lenksteller als elektromechanischer Aktuatoreinheit ist. Wird eine Abweichung des Sollverhaltens des Lenkstellers erfasst, wird bei dieser Ausgestaltung vorteilhafterweise eine taktile Rückmeldung auf die Lenkhandhabe aufgebracht, insbesondere mittels eines Feedback-Aktuators des Lenksystems.

Das des Weiteren zur Lösung der obenstehend genannten Aufgabe vorgeschlagene Bediensystem eines Kraftfahrzeugs umfasst ein Steuerelement, eine Sensoreinheit, eine elektromechanische Aktuatoreinheit und einen Feedback-Aktuator. Das Steuerelement ist dabei vorteilhafterweise ausgebildet, bei Betätigung einen Steuerbefehl zum Steuern eines Kraftfahrzeugs als Steuerungsinformation vorzugeben. Die Sensoreinheit ist vorteilhafterweise ausgebildet, die von dem Steuerelement vorgegebene Steuerungsinformation zu erfassen. Die Steuereinheit ist vorteilhafterweise ausgebildet, basierend auf der erfassten Steuerungsinformation zur Umsetzung des Steuerbefehls ein Steuerungssignal zur Ansteuerung der elektromechanischen Aktuatoreinheit bereitzustellen. Die elektromechanische Aktuatoreinheit ist vorteilhafterweise ausgebildet, den Steuerbefehl entsprechend dem bereitgestellten Steuerungssignal umzusetzen. Der Feedback-Aktuator ist vorteilhafterweise ausgebildet, eine taktile Rückmeldung auf das Steuerelement aufzubringen. Erfindungsgemäß ist das Bediensystem ausgebildet, gemäß einem erfindungsgemäß ausgebildeten Verfahren betrieben zu werden, wobei das Verfahren insbesondere die vorstehend beschriebenen Merkmale einzeln oder in einer beliebigen Kombination umfasst. Insbesondere ist das Bediensystem eines Kraftfahrzeugs also ausgebildet, derart betrieben zu werden, dass ein Steuerbefehl zum Steuern des Kraftfahrzeugs über ein Steuerelement vorgegeben wird, der über das Steuerelement vorgegebene Steuerbefehl sensorisch erfasst und von einer elektronischen Steuereinheit an eine elektromechanische Aktuatoreinheit als Steuerungssignal weitergegeben wird, wobei die Aktuatoreinheit den Steuerbefehl entsprechend dem Steuerungssignal umsetzt, das Bediensystem auf ein Auftreten einer Abweichung von einem Sollverhalten der Aktuatoreinheit überwacht wird, und bei einer erkannten Abweichung eine taktile Rückmeldung auf das Steuerelement aufgebracht wird. Das vorgeschlagene Bediensystem ermöglicht es einem Fahrzeugnutzer somit vorteilhafterweise, eine Veränderung im Betriebsverhalten der Aktuatoreinheit, die nicht mehr innerhalb eines Sollverhaltens liegt, durch die auf das Steuerelement aufgebrachte taktile Rückmeldung wahrzunehmen.

Gemäß einer bevorzugten Ausgestaltung ist das Bediensystem ein Drive-by-Wire-System, also insbesondere ein Bediensystem, das ein Fahren eines Kraftfahrzeugs ohne mechanische Kraftübertragung der Bedienelemente zu den entsprechenden Stellelementen ermöglicht. Insbesondere ist vorgesehen, dass das Bediensystem ein Brake-by-Wire-System mit einem Bremspedal als Steuerelement und einer Bremsaktuatoreinheit als elektromechanischer Aktuatoreinheit ist. Weiter ist insbesondere vorgesehen, dass das Bediensystem ein Electronic-Power-Control-System mit einem Gaspedal als Steuerelement und einer Antriebsaktuatoreinheit als elektromechanischer Aktuatoreinheit ist. Als weitere besonders vorteilhafte Ausgestaltung ist vorgesehen, dass das Bediensystem ein Steer-by-Wire-Lenksystem mit einer Lenkhandhabe als Steuerelement und einem Lenksteller als elektromechanischer Aktuatoreinheit ist. Bei dieser Ausgestaltung ist insbesondere vorgesehen, dass das Steuerelement eine drehfest an einer Lenkwelle angeordnete Lenkhandhabe ist, mit der ein Lenkbefehl als Steuerbefehl vorgegeben werden kann. Des Weiteren ist insbesondere vorgesehen, dass das Bediensystem bei dieser Ausgestaltung ein Lenkgetriebe umfasst, das einen Lenksteller als Aktuatoreinheit und ein Koppelelement aufweist, wobei zur Umsetzung eines Lenkbefehls in eine Lenkbewegung von lenkbaren Rädern eines Kraftfahrzeugs ein Steuersignal an die Antriebseinheit des Lenkstellers gesendet wird und die Antriebseinheit das empfangene Steuersignal in eine mechanische Bewegung des Lenkstellers umsetzt, indem der Lenksteller auf das Koppelelement einwirkt. Darüber hinaus umfasst das Steer-by-Wire-Lenksystem vorteilhafterweise einen Feedback-Aktuator, der bei einem Normalbetrieb einem Fahrzeugnutzer beim Steuern ein Lenkgefühl vermittelt und eine Rückmeldung liefert, insbesondere bezüglich eines Räder-Fahrbahnkontakts. Darüber hinaus ist der Feedback-Aktuator bei dieser Ausgestaltung vorteilhafterweise ausgebildet, zusätzlich dazu eine taktile Rückmeldung auf die Lenkhandhabe aufzubringen, wenn eine Abweichung des Lenkstellers von einem Sollverhalten erfasst wurde.

Insbesondere schlägt die Erfindung auch ein Kraftfahrzeug mit einem erfindungsgemäß ausgebildetem Bediensystem vor.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigt:
- Fig. 1: in einer vereinfachten teils perspektivischen und teils schematischen Darstellung ein Ausführungsbeispiel für erfindungsgemäß ausgebildete Bediensysteme eines Kraftfahrzeugs;
- Fig. 2: in einer vereinfachten schematischen Darstellung ein weiteres Ausführungsbeispiel für erfindungsgemäß ausgebildete Bediensysteme in einem Kraftfahrzeug; und
- Fig. 3: ein Blockschaltbild zur Illustration eines Ausführungsbeispiels für den Ablauf eines erfindungsgemäß ausgebildeten Verfahrens.

In den verschiedenen Figuren sind gleiche Teile in der Regel mit den gleichen Bezugszeichen versehen und werden daher mitunter auch jeweils nur im Zusammenhang mit einer der Figuren erläutert.

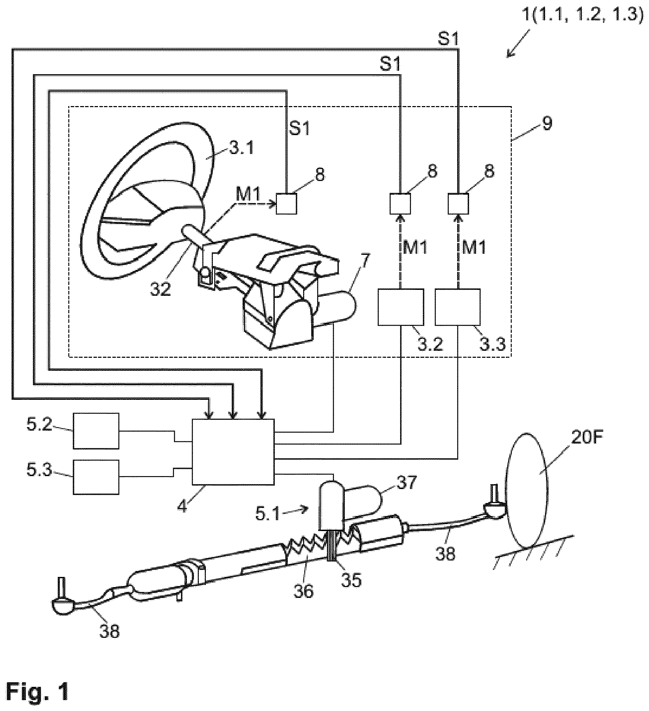

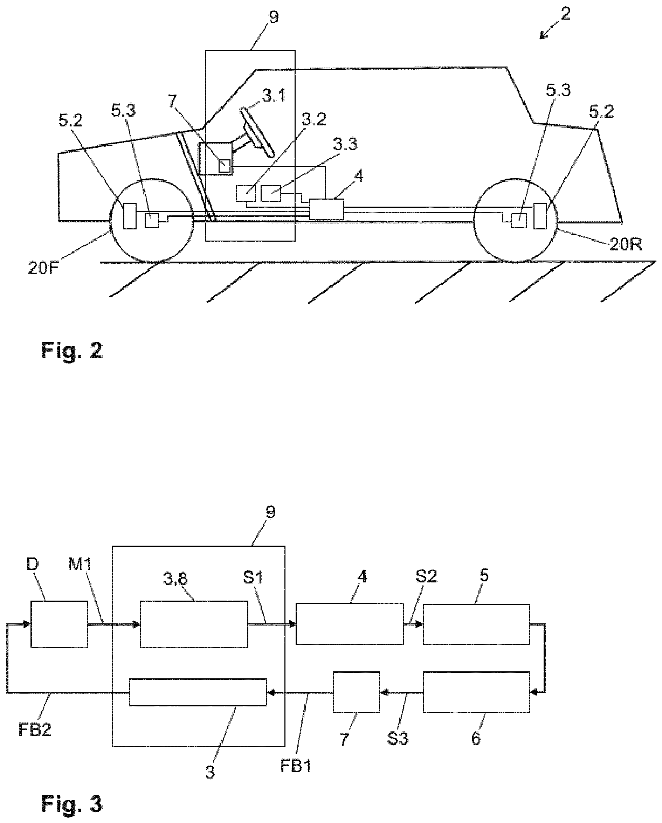

Bei dem in Fig. 1 gezeigten Ausführungsbeispiel sind drei Drive-by-Wire-Systeme als Bediensysteme 1 für ein Kraftfahrzeug schematisch dargestellt und zwar ein Steer-by-Wire-Lenksystem 1.1, ein Brake-by-Wire-System 1.2 sowie ein Electronic-Power-Control-System 1.3. Fig. 2 zeigt in einer schematischen Darstellung ein Kraftfahrzeug 2, das ein Steer-by-Wire-Lenksystem 1.1, ein Brake-by-Wire-System 1.2 und ein Electronic-Power-Control-System 1.3 aufweist. In dem in Fig. 2 gezeigten Ausführungsbeispiel wirkt das Steer-by-Wire-Lenksystem 1.1 nur auf die vorderen Räder 20F des Kraftfahrzeugs 2. Das Brake-by-Wire-System 1.2 und das Electronic-Power-Control-System 1.3 wirken jeweils sowohl auf die vorderen Räder 20F des Kraftfahrzeugs 2 als auch auf die hinteren Räder 20R des Kraftfahrzeugs 2.

Die Bediensysteme 1 umfassen dabei jeweils ein Steuerelement 3, das ausgebildet ist, bei Betätigung einen Steuerbefehl M1 zum Steuern eines Kraftfahrzeugs 2 als Steuerungsinformation vorzugeben. Des Weiteren umfassen die Bediensysteme 1 jeweils eine Sensoreinheit 8, die ausgebildet ist, die von dem Steuerelement 3 vorgegebene Steuerungsinformation, also den auf das Steuerelement 3 aufgebrachten Steuerbefehl M1, zu erfassen. Weiter umfassen die Bediensysteme 1 eine gemeinsame zentrale Steuereinheit 4, insbesondere eine ECU. Die Steuereinheit 4 ist ausgebildet, basierend auf der erfassten Steuerungsinformation, die als jeweiliges Sensorsignal S1 an die Steuereinheit 4 von den Sensoren 8 übertragen wird, zur Umsetzung des jeweiligen Steuerbefehls M1 ein Steuerungssignal S2 zur Ansteuerung einer jeweiligen elektromechanischen Aktuatoreinheit 5 des jeweiligen Bediensystems 1 bereitzustellen. Die elektromechanischen Aktuatoreinheiten 5 sind dabei jeweils ausgebildet, den Steuerbefehl M1 entsprechend dem bereitgestellten Steuerungssignal S2 umzusetzen. Zudem umfassen die Bediensysteme 1 jeweils einen Feedback-Aktuator 7, der in Fig. 1 und Fig. 2 nur für das Steer-by-Wire-Lenksystem 1.1 exemplarisch dargestellt ist. Der Feedback-Aktuator 7 ist dabei jeweils ausgebildet, eine taktile Rückmeldung auf das jeweilige Steuerelement 3 aufzubringen.

Die Steuerelemente 3, über die ein Fahrzeugnutzer einerseits einen Steuerbefehl M1 vorgeben kann und über die andererseits ein Fahrzeugnutzer eine Rückmeldung FB2 von dem jeweiligen Bediensystem 1 erhalten kann, bilden vorliegend eine Mensch-Maschine-Schnittstelle 9.

In diesem Ausführungsbeispiel umfasst das Brake-by-Wire-System 1.2 ein Bremspedal 3.2 als Steuerelement 3 und eine Bremsaktuatoreinheit 5.2 als elektromechanische Aktuatoreinheit 5. Die Bremsaktuatoreinheit 5.2 kann insbesondere für jedes Rad 20F, 20R wenigstens einen Bremskolben umfassen, mit dem Bremsbeläge zu oder von einer Bremsscheibe bewegt werden können. Durch ein Treten des Bremspedals 3.2 durch einen Fahrzeugnutzer wird dabei in bekannter Weise ein Bremsbefehl als Steuerbefehl M1 vorgegeben, der von dem Sensor 8 des Brake-by-Wire-Systems 1.2 erfasst und als Sensorsignal S1 an die zentrale Steuereinheit 4 übertragen wird. Basierend auf dem Sensorsignal S1 erzeugt die Steuereinheit 4 ein Steuerungssignal S2, das an die Bremsaktuatoreinheit 5.2 übertragen wird, woraufhin die Bremsaktuatoreinheit 5.2 den Steuerbefehl M1 entsprechend dem Steuerungssignal S2 umsetzt.

Das in Fig. 1 und Fig. 2 als weiteres Bediensystem 1 dargestellte Electronic-Power-Control-System 1.3 umfasst in diesem Ausführungsbeispiel ein Gaspedal 3.3 als Steuerelement 3 und eine Antriebsaktuatoreinheit 5.3, insbesondere die Räder eines Kraftfahrzeugs 2 direkt antreibende Radnabenmotoren, als elektromechanische Aktuatoreinheit 5. Durch ein Treten des Gaspedals 3.3 durch einen Fahrzeugnutzer wird dabei in bekannter Weise ein Fahrbefehl als Steuerbefehl M1 vorgegeben, der von dem Sensor 8 des Electronic-Power-Control-Systems 1.3 erfasst und als Sensorsignal S1 an die zentrale Steuereinheit 4 übertragen wird. Basierend auf dem Sensorsignal S1 erzeugt die Steuereinheit 4 ein Steuerungssignal S2, das an die Antriebsaktuatoreinheit 5.3 übertragen wird, woraufhin die Antriebsaktuatoreinheit 5.3 den Steuerbefehl M1 entsprechend dem Steuerungssignal S2 umsetzt.

Das Steer-by-Wire-Lenksystem 1.1 als weiteres Bediensystem 1 umfasst in diesem Ausführungsbeispiel eine Lenksäule 31 mit einer Lenkwelle 32, wobei an einem Ende der Lenkwelle 32 eine als Lenkrad ausgebildete Lenkhandhabe 3.1 drehfest angeordnet ist. Die Lenkhandhabe 3.1 ist dabei das Steuerelement 3 des Steer-by-Wire-Lenksystems 1.1. Über die Lenkhandhabe 3.1 kann ein Fahrzeugnutzer einen Lenkbefehl als Steuerbefehl M1 vorgeben. Die Lenkhandhabe 3.1 lässt sich dabei in bekannter Weise drehen, um ein Drehmoment als Steuerbefehl M1 in die Lenkwelle 32 einzubringen, der von dem Sensor 8 des Steer-by-Wire-Lenksystems 1.1 erfasst wird. Dabei werden insbesondere Sensorsignale S1 bezüglich eines aufgebrachten Drehwinkels, eines aufgebrachten Drehmoments und einer Drehgeschwindigkeit der Lenkwelle 32 von dem Sensor 8 erfasst und an die Steuereinheit 4 übertragen.

Des Weiteren umfasst das Steer-by-Wire-Lenksystem 1 in diesem Ausführungsbeispiel ein Lenkgetriebe mit einem als Zahnstange ausgebildeten Koppelelement 36 und einem Lenksteller 5.1 als elektromechanischer Aktuatoreinheit 5. Der Lenksteller 5.1 umfasst dabei einen Elektromotor 37 und ein mittels des Elektromotors 37 antreibbares Lenkritzel 35. Mit dem Elektromotor 37 des Lenkstellers 5.1 lässt sich das Lenkritzel 35 zur Einwirkung auf das Koppelelement 6 und zur Auslösung einer Lenkbewegung von lenkbaren Rädern 20F, die insbesondere über Spurstangen 38 mit dem Koppelelement 36 verbunden sind, antreiben. Die Spurstangen 38 selbst sind in bekannter Weise über Achsschenkel mit je einem gelenkten Rad 20F verbunden.

In einem Normalbetriebsmodus des Steer-by-Wire-Lenksystems 1.1 werden die erfassten Sensorsignale S1 als erfasster Steuerbefehl M1 an die zentrale Steuereinheit 4 gesendet. Die Steuereinheit 4 generiert insbesondere basierend auf den empfangenen Sensorsignalen S1 ein Steuersignal. Das Steuersignal wird zur Umsetzung des erfassten Steuerbefehls M1 in die Lenkbewegung der lenkbaren Räder 20F an den Elektromotor 37 des Lenkstellers 5.1 gesendet. Der Elektromotor 37 setzt das empfangene Steuersignal daraufhin in eine Rotationsbewegung des Lenkritzels 35 des Lenkstellers 5.1 um, wobei das Lenkritzel 35 diese Rotationsbewegung in eine entsprechende translatorische Bewegung des Koppelelements 36, umsetzt, die zur Einstellung des Lenkwinkels der lenkbaren Räder 20F führt. Der Feedback-Aktuator 7 des Steer-by-Wire-Lenksystems 1.1 liefert dabei zur Vermittlung eines Lenkgefühls eine Rückmeldung an die Lenkhandhabe 3.1.

Allen drei Bediensystemen 1 ist dabei gemein, dass diese ausgebildet sind, derart betrieben zu werden, dass das jeweilige Bediensystem 1 auf ein Auftreten einer Abweichung von einem Sollverhalten der jeweiligen Aktuatoreinheit 5 überwacht wird, und bei einer erkannten Abweichung eine taktile Rückmeldung FB1 auf das jeweilige Steuerelement 3 aufgebracht wird. Zur Erkennung einer Abweichung von einem Sollverhalten der jeweiligen Aktuatoreinheit 5 kann die zentrale Steuereinheit 4 insbesondere eine Diagnoseeinheit umfassen. Insbesondere kann aber auch vorgesehen sein, dass die Aktuatoreinheiten 5 jeweils eine Diagnoseeinheit umfassen.

Wird eine Abweichung von einem Sollverhalten der jeweiligen Aktuatoreinheit 5 erkannt, ist insbesondere vorgesehen, dass die auf das jeweilige Steuerelement 3 aufgebrachte taktile Rückmeldung FB1 eine von einem Normalbetrieb abweichende Reaktion des jeweiligen Steuerelements 3 ist, wobei die taktile Rückmeldung FB1 von dem Feedback-Aktuator 7 hervorgerufen wird. So kann insbesondere ein Bewegungsmuster, vorzugsweise eine Vibration, auf das jeweilige Steuerelement 3 als taktile Rückmeldung FB1 aufgebracht werden. Alternativ oder zusätzlich ist aber insbesondere für das Brake-by-Wire-System 1.2 vorgesehen, dass beispielsweise bei später ansprechenden Bremsen ein Pedalweg des Bremspedals 5.2 verlängert wird. Gleiches kann der Fall sein, wenn die Antriebsaktuatoreinheit 5.3 des Electronic-Power-Control-Systems 1.3 eine geringere Leistung als im Normalbetrieb bereitstellt. Bei dem Steer-by-Wire-Lenksystem 1.1 ist insbesondere vorgesehen, dass ein Lenkwiderstandsmoment der Lenkwelle 32 erhöht wird, wenn der Lenksteller 5.1 schwergängiger arbeitet.

Eine vorteilhafte Ausgestaltungsvariante für ein Verfahren zum Betreiben der in Fig. 1 und Fig. 2 dargestellten Bediensysteme 1 wird nachfolgend unter Bezugnahmen auf Fig. 3 erläutert. Das Verfahren sieht vor, dass von einem Fahrzeugnutzer D ein Steuerbefehl M1 zum Steuern des Kraftfahrzeugs 2 über ein Steuerelement 3, das eine Mensch-Maschine-Schnittstelle 9 bildet, vorgegeben wird. Dieser über das Steuerelement 3 vorgegebene Steuerbefehl M1 wird von wenigstens einem Sensor 8 erfasst und als Sensorsignal S1 an eine elektronische Steuereinheit 4 des Kraftfahrzeugs 2 übertragen. Basierend auf dem den Steuerbefehl M1 repräsentierenden Sensorsignal S1 wird ein Steuerungssignal S2 von der Steuereinheit 4 an die elektromechanische Aktuatoreinheit 5 des Bediensystems 1 übertragen. Angesteuert mit dem Steuerungssignal S2 setzt die Aktuatoreinheit 5 den von dem Fahrzeugnutzer D vorgegebenen Steuerbefehl M1 entsprechend um. Dabei wird mittels einer Diagnoseeinheit 6 überwacht, ob die Umsetzung des Steuerbefehls M1 durch die Aktuatoreinheit 5 einem vordefinierten Sollverhalten entspricht. Insbesondere kann dazu die Einhaltung von vordefinierten Schwellwerten ausgewertet werden. Erfolgt die Umsetzung des Steuerbefehls M1 durch die Aktuatoreinheit 5 dem vordefinierten Sollverhalten, so wird das Bediensystem 1 in bekannter Weise weiter betrieben. Erkennt die Diagnoseeinheit 6 hingegen bei der Umsetzung des Steuerbefehls M1 durch die Aktuatoreinheit 5 eine Abweichung von dem vordefinierten Sollverhalten, so wird von der Diagnoseeinheit 6 ein Rückmeldungssignal S3 generiert, das an den Feedback-Aktuator 7 des Bediensystems 1 zur Aufbringung einer taktilen Rückmeldung FB1 auf das Steuerelement 3 übertragen wird. Basierend auf diesem Rückmeldungssignal S3 erzeugt der Feedback-Aktuator 7 eine taktile Rückmeldung FB1, die auf das Steuerelement 3 aufgebracht wird, insbesondere als eine Veränderung eines Widerstandsmoments bei der Bedienung des Steuerelements 3 durch den Fahrzeugnutzer D. Die auf das Steuerelement 3 aufgebrachte taktile Rückmeldung FB1 wird dann von dem Fahrzeugnutzer D bei Nutzung des Steuerelements 3 als Rückmeldung FB2 wahrgenommen.

Bei diesem Ausführungsbeispiel ist dabei vorgesehen, dass von der Diagnoseeinheit 6 ein Güteabfall der Aktuatoreinheit 5, die insbesondere auf einen Verschleiß und/oder eine Alterung der Aktuatoreinheit 5 zurückzuführen sein kann, als Abweichung von dem Sollverhalten überwacht wird. Wenn sich also die Güte der Aktuatoreinheit 5 derart ändert, dass daraus eine Abweichung von dem Sollverhalten resultiert, wird dies erkannt und eine entsprechende taktile Rückmeldung FB1 generiert. Eine Änderung der Güte kann dabei insbesondere eine Veränderung des Spiels, ein verzögertes Ansprechverhalten und/oder eine Erhöhung einer inneren Reibung der Aktuatoreinheit 5 sein. Dabei wird von der Diagnoseeinheit 6 ebenfalls ausgewertet, wie groß die Abweichung von dem Sollverhalten ist und basierend darauf ein Grad einer Abweichung von dem Sollverhalten bestimmt und erfasst. Das Rückmeldungssignal S3 zur Ansteuerung des Feedback-Aktuators 7 wird dann von der Diagnoseeinheit 6 abhängig von dem erfassten Grad der Sollwertabweichung generiert. Das erfolgt derart, dass eine beim Betrieb der Aktuatoreinheit 5 festgestellte geringe Abweichung von einem Sollverhalten der Aktuatoreinheit 5 eine schwächere taktile Rückmeldung FB1 bewirkt und eine beim Betrieb der Aktuatoreinheit 5 festgestellte starke Abweichung von einem Sollverhalten der Aktuatoreinheit 5 eine starke taktile Rückmeldung FB1 bewirkt. Die taktile Rückmeldung FB1 wird also umso ausgeprägter erzeugt, je höher der erfasste Grad der Abweichung von dem Sollverhalten ist. Das Rückmeldungssignal S3 kann abweichend auch von der Steuereinheit 4 generiert werden, wobei in dem Fall die Diagnoseeinheit 6 die Auswerteergebnisse an die Steuereinheit 4 überträgt. Insbesondere können die Steuereinheit 4 und die Diagnoseeinheit 6 von einer physischen Recheneinheit gebildet sein.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Bediensystem
- 1.1: Steer-by-Wire-Lenksystem
- 1.2: Brake-by-Wire-System
- 1.3: Electronic-Power-Control-System
- 2: Kraftfahrzeug
- 3: Steuerelement
- 3.1: Lenkhandhabe
- 3.2: Bremspedal
- 3.3: Gaspedal
- 4: Steuereinheit
- 5: Aktuatoreinheit
- 5.1: Lenksteller
- 5.2: Bremsaktuatoreinheit
- 5.3: Antriebsaktuatoreinheit
- 6: Diagnoseeinheit
- 7: Feedback-Aktuator
- 8: Sensoreinheit
- 9: Mensch-Maschine-Schnittstelle
- 20F: lenkbares Rad
- 20R: Rad
- 31: Lenksäule
- 32: Lenkwelle
- 35: Lenkritzel des Lenkstellers (5.1)
- 36: Koppelelement
- 37: Elektromotor des Lenkstellers (5.1)
- 38: Spurstange
- D: Fahrzeugnutzer
- M1: Steuerbefehl
- S1: Sensorsignal
- S2: Steuerungssignal
- S3: Rückmeldungssignal
- FB1: taktile Rückmeldung
- FB2: vom Fahrer wahrgenommene Rückmeldung

## Patentansprüche

1. Verfahren zum Betreiben eines Bediensystems (1) eines Kraftfahrzeugs (2), bei dem ein Steuerbefehl (M1) zum Steuern des Kraftfahrzeugs (2) über ein Steuerelement (3) vorgegeben wird, der über das Steuerelement (3) vorgegebene Steuerbefehl (M1) sensorisch erfasst und von einer elektronischen Steuereinheit (4) an eine elektromechanische Aktuatoreinheit (5) als Steuerungssignal (S2) weitergegeben wird, wobei die Aktuatoreinheit (5) den Steuerbefehl (M1) entsprechend dem Steuerungssignal (S2) umsetzt, **dadurch gekennzeichnet, dass** das Bediensystem (1) auf ein Auftreten einer Abweichung von einem Sollverhalten der Aktuatoreinheit (5) überwacht wird, und bei einer erkannten Abweichung eine taktile Rückmeldung (FB1) auf das Steuerelement (3) aufgebracht wird.

2. Verfahren nach Anspruch 1, **dadurch gekennzeichnet, dass** ein Güteabfall der Aktuatoreinheit (5) als Abweichung von dem Sollverhalten überwacht wird.

3. Verfahren nach Anspruch 1 oder Anspruch 2, **dadurch gekennzeichnet, dass** bei einer erkannten Abweichung von dem Sollverhalten ein Rückmeldungssignal (S3) generiert wird, wobei basierend auf dem Rückmeldungssignal (S3) die taktile Rückmeldung (FB1) erzeugt wird.

4. Verfahren nach einem der vorstehenden Ansprüche, **dadurch gekennzeichnet, dass** ein Grad einer Abweichung von dem Sollverhalten erfasst wird.

5. Verfahren nach Anspruch 3 und Anspruch 4, **dadurch gekennzeichnet, dass** das Rückmeldungssignal (S3) abhängig von dem erfassten Grad der Sollwertabweichung generiert wird.

6. Verfahren nach Anspruch 4 oder Anspruch 5, **dadurch gekennzeichnet, dass** die taktile Rückmeldung (FB1) umso ausgeprägter erzeugt wird, je höher der erfasste Grad der Abweichung von dem Sollverhalten ist.

7. Verfahren nach einem der vorstehenden Ansprüche, **dadurch gekennzeichnet, dass** das Bediensystem (1) ein Brake-by-Wire-System (1.2) mit einem Bremspedal (3.2) als Steuerelement (3) und einer Bremsaktuatoreinheit (5.2) als elektromechanischer Aktuatoreinheit (5) ist; oder **dass** das Bediensystem (1) ein Electronic-Power-Control-System (1.3) mit einem Gaspedal (3.3) als Steuerelement (3) und einer Antriebsaktuatoreinheit (5.3) als elektromechanischer Aktuatoreinheit (5) ist; oder **dass** das Bediensystem (1) ein Steer-by-Wire-Lenksystem (1.1) mit einer Lenkhandhabe (3.1) als Steuerelement (3) und einem Lenksteller (5.1) als elektromechanischer Aktuatoreinheit (5) ist.

8. Bediensystem (1) eines Kraftfahrzeugs (2) umfassend
ein Steuerelement (3), das ausgebildet ist, bei Betätigung einen Steuerbefehl (M1) zum Steuern eines Kraftfahrzeugs (2) als Steuerungsinformation vorzugeben,
eine Sensoreinheit (8), die ausgebildet ist, die von dem Steuerelement (3) vorgegebene Steuerungsinformation zu erfassen,
eine Steuereinheit (4), die ausgebildet ist, basierend auf der erfassten Steuerungsinformation zur Umsetzung des Steuerbefehls (M1) ein Steuerungssignal (S2) zur Ansteuerung einer elektromechanischen Aktuatoreinheit (5) bereitzustellen,
eine elektromechanische Aktuatoreinheit (5), die ausgebildet ist, den Steuerbefehl (M1) entsprechend dem bereitgestellten Steuerungssignal (S2) umzusetzen, und
einen Feedback-Aktuator (7), der ausgebildet ist, eine taktile Rückmeldung (FB1) auf das Steuerelement (3) aufzubringen,
**dadurch gekennzeichnet, dass**
das Bediensystem (1) ausgebildet ist, nach einem Verfahren gemäß einem der Ansprüche 1 bis 6 betrieben zu werden.

9. Bediensystem (1) nach Anspruch 8, **dadurch gekennzeichnet, dass** das Bediensystem (1) ein Drive-by-Wire-System ist.

10. Bediensystem (1) nach Anspruch 8 oder Anspruch 9, **dadurch gekennzeichnet, dass** das Bediensystem (1) ein Brake-by-Wire-System (1.2) mit einem Bremspedal (3.2) als Steuerelement (3) und einer Bremsaktuatoreinheit (5.2) als elektromechanischer Aktuatoreinheit (5) ist; oder **dass** das Bediensystem (1) ein Electronic-Power-Control-System (1.3) mit einem Gaspedal (3.3) als Steuerelement (3) und einer Antriebsaktuatoreinheit (5.3) als elektromechanischer Aktuatoreinheit (5) ist; oder **dass** das Bediensystem (1) ein Steer-by-Wire-Lenksystem (1.1) mit einer Lenkhandhabe (3.1) als Steuerelement (3) und einem Lenksteller (5.1) als elektromechanischer Aktuatoreinheit (5) ist.
